# EUROPEAN PATENT APPLICATION

(11) **EP 1 758 195 A1**
(43) Date of publication of application: **28.02.2007**
(21) Application number: 06017348.1
(22) Date of filing: 21.08.2006
(51) Int. Cl.: H01M 8/04

(54) **System for preventing freezing of fuel cell**

(30) Priority: 22.08.2005 KR 20050077003
(71) Applicant: LG Electronics Inc., Yongdungpo-gu Seoul (KR); LG Chem, Ltd., Yongdungpo-Gu Seoul (KR)
(72) Inventor: Kim, Ki-Dong, Gimpo Gyeonggi-Do (KR); Kim, Sun-Hoe, Guro-Gu Seoul (KR)
(74) Representative: Urner, Peter

(57) **Abstract**

A system for preventing freezing of a fuel cell comprises: a stack unit for generating an electrical energy and a heat energy; a temperature sensing unit installed at the stack unit; a heater unit operated according to a value sensed by the temperature sensing unit; and a control unit electrically connected to the temperature sensing unit and the extinguishing unit. it is possible to avoid the main parts of the fuel cell from being frozen due to an external temperature change, so that the performance of the entire system can be prevented from deterioration or malfunctioning, thereby increasing the stability of the fuel cell.

## Description

### BACKGROUND OF THE INVENTION

### 1. Field of the Invention

The present invention relates to a fuel cell, and more particularly to, a system for preventing freezing of a fuel cell which can prevent a fuel cell from being frozendue to an environmental temperature change.

### 2. Description of the Related Art

In general, a fuel cell is a device for directly transforming energy of a fuel into electric energy. Such a fuel cell is a fuel cell system in which an anode and a cathode are installed on both sides of a polymer electrolyte film, and which generates electrical energy by the movement of electrons created when electrochemical oxidation of oxygen serving as a fuel occurs at the cathode (oxidized electrode or fuel electrode) and electrochemical reduction of oxygen serving as an oxidizer occurs at the cathode (reduced electrode or air electrode), which may be referred to as a kind of power generation plant.

The aforementioned fuel cell is classified into an alkaline fuel cell (AFC), a phosphoric acid fuel cell (PAFC), a molten carbonate fuel cell (MCFC), a solid electrolyte fuel cell (SOFC), a polymer electrolyte fuel cell (PEMFC), and so forth, depending on operating temperature and the type of main fuels. Among them, the electrolyte of the polymer electrolyte fuel cell is not liquid but a solid polymer membrane, which is distinguished from other fuel cell types. In the polymer electrolyte fuel cell, fuels can be used typically in such a manner that a hydrocarbon (CH) fuel, such as LNG, LPG, etc, is refined into hydrogen (H₂) through desulfurization, reforming reaction, and hydrogen refining process at a reforming unit, and the refined hydrogen is supplied to the fuel electrode of a stack unit.

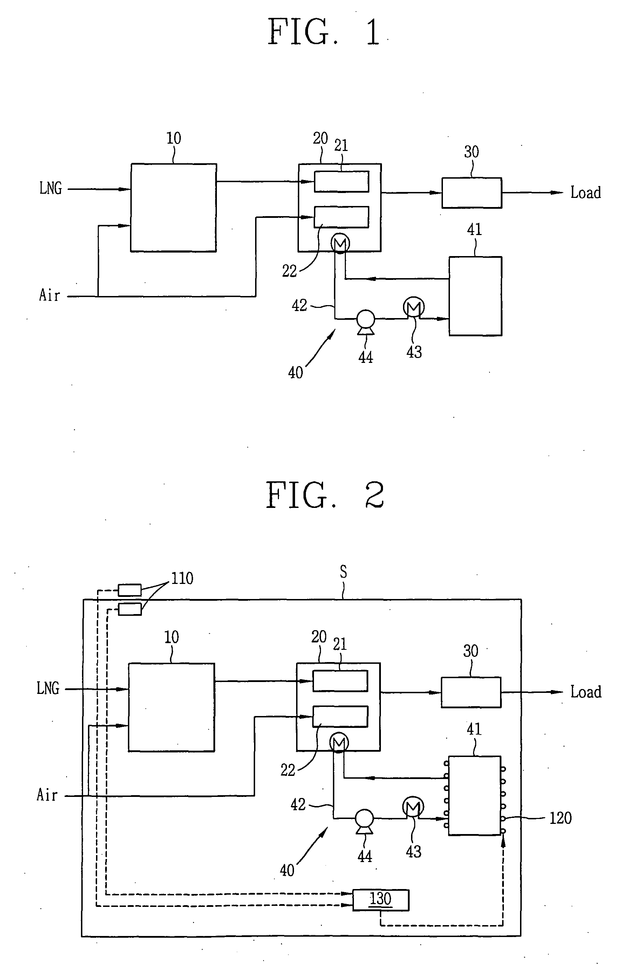

FIG. 1 is a systematic view of a PEMFC (Proton Exchange fuel cell) type fuel cell in which a hydrocarbon (CH) fuel, CH₃OH, etc ("LPG" in the drawing), is refined into hydrogen (H₂) through desulfurization, reforming reaction, and hydrogen refining process at a reformer and used as a fuel.

As shown therein, the prior art fuel cell includes a reforming unit 10 refining hydrogen from LNG, a stack unit 20 connected to the reforming unit 10, and provided with a fuel electrode 21 to receive refined hydrogen and an air electrode 22 to receive oxygen in the air, for producing electricity and heat by an electrochemical reaction between hydrogen and oxygen, an electricity conversion unit 30 connected to the output side of the stack unit 20, for converting electricity and supplying the same to a load, a heat exchange unit 40 supplying water to the reforming unit 10 and the stack unit 20 and cooling the reforming unit 10 and the stack unit 20, and a control unit (not shown) electrically connected to the above-described units 10, 20, 30 and 40, for controlling the same.

The heat exchange unit 40 includes a water storage tank 41 for charging a predetermined quantity of water therein, a cooling water line 42 for connecting between the stack unit 20 and the water storage tank 41 in a cyclic fashion, a heat radiator 43 installed at a middle portion of the cooling water line 42, for cooling the water recovered from the stack unit 20 to the water storage tank 41, and a circulation pump 44 installed at a middle portion of the cooling water line 42 and pumping the water of the water storage tank 41 and supplying the pumped water to the stack unit 20 and so forth.

The above-described prior art fuel cell operates as follows.

That is, a hydrocarbon fuel is reformed at the reforming unit 10 and refined into hydrogen, and the hydrogen is supplied to the fuel electrode 41 of the stack unit 20 while air is supplied to the air electrode 22 of the stack unit 20, thereby causing an oxidation reaction at the fuel electrode 21 and a reduction reaction at the air electrode 22. Electrons created in this process generate electricity while moving from the fuel electrode 41 to the air electrode 42, and this electricity is transformed to AC electricity and thus supplied to various kinds of electric appliances.

Here, since the stack unit generates heat along with electricity, the stack unit 20 and so forth are cooled by repeating a series of procedures of operating the circulation pump 43 of the heat exchange unit 40 to supply the water filled in the water storage tank 41 to the stack unit 20 via the cooling water line 42 and recovering the water.

However, in the above-described prior art fuel cell, the reforming unit 10, the stack unit 20, the heat exchange unit 40 and so forth are connected by pipes, fuel and air flow in a wet state, and a large quantity of water is stored in the water storage tank 41, so that if an ambient temperature of the system is low, there is a possibility that the pipelines are frozen and the entire system is malfunctioning.

### BRIEF DESCRIPTION OF THE INVENTION

Therefore, the present invention has been made in consideration of the above problems of the prior art fuel cell, and has as its object to provide a system for preventing freezing of a fuel cell, which can prevent freezing of the system by automatically operating a heating apparatus even if an ambient temperature is cooled down to a preset temperature.

To achieve these and other advantages and in accordance with the purpose of the present invention, as embodied and broadly described herein, there is provided a system for preventing freezing of a fuel cell, including: a stack unit provided with a fuel electrode and an air electrode, for creating an electrical energy and a thermal energy by an electrochemical reaction between hydrogen and oxygen; a temperature sensing unit installed in a manner to sense at least one of internal and external temperatures of a system case having the stack unit; a heater unit for switching to a heat generation mode for operation if the temperature sensed by the temperatures sensing unit is less than a preset temperature; and a control unit electrically connected to the temperature sensing unit and the heater unit, for controlling the operation of the heater unit depending on a temperature change sensed by the temperature sensing unit. ,

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a systematic view of one example of a prior art fuel cell;
FIG. 2 is a systematic view of one example of a fuel cell with a freezing preventing system according to the present invention; and
FIG. 3 is an enlarged systematic view of a system for preventing freezing of a fuel cell according to the present invention.

### DETAILED DESCRIPTION OF THE INVENTION

Hereinafter, a system for preventing freezing of a fuel cell according to the present invention will be described with reference to one embodiment which is illustrated in the accompanying drawings.

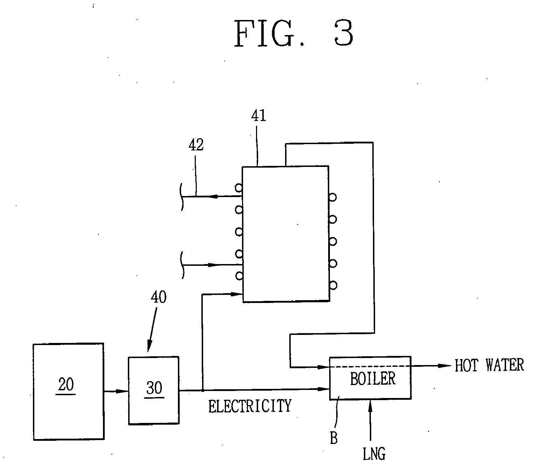

FIG. 2 is a systematic view of one example of a fuel cell with a freezing preventing system according to the present invention. FIG. 3 is an enlarged systematic view of a system for preventing freezing of a fuel cell according to the present invention.

As shown therein, the fuel cell according to the present invention includes a reforming unit 10 refining hydrogen from LNG, a stack unit 20 provided with a fuel electrode 21 to receive refined hydrogen and an air electrode 22 to receive oxygen from the air, for producing electricity and heat by an electrochemical reaction between hydrogen and oxygen, an electricity conversion unit 30 connected to the output side of the stack unit 20, for supplying electricity to a load, a heat exchange unit 40 for supplying water to the reforming unit 10 and the stack unit 20 and cooling the reforming unit 10 and the stack unit 20, a temperature sensing unit 110 installed inside and outside a system case S housing the reforming unit 10, stack unit 20, electricity conversion unit 30 and so forth, for detecting at least one of internal and external temperatures of the system case S, a heater unit 120 for generating heat to prevent freezing of a corresponding region if the temperature sensed by the temperature sensing unit 110 is less than a preset temperature, and a control unit 130 for properly controlling the above-described units 10, 20, 30, 40, 110, and 120.

The stack unit 20 has the fuel electrode 21 and the air electrode 22 arranged with an electrolyte film (not shown) interposed therebetween, and a separator plate (not shown) with a fuel flow path and an air flow path is installed on the outer surface of the fuel electrode 21 and air electrode 22 to form unit cells. The unit cells are stacked in layers to comprise the stack unit 20.

The electricity conversion unit 30 is constructed in such a manner that a DC created in the stack unit 20 is converted to an AC and supplied to an electrical appliance for AC power use, or a DC is supplied as it is to an electrical appliance for DC power use.

The heat exchange unit 40 includes a water storage tank 41 made of high heat resistant material, for charging a predetermined quantity of water therein, a cooling water line 42 for connecting between the stack unit 20 and the water storage tank 41 in a closed loop shape so as to circulate water therebetween, a heat radiator 43 installed at a middle portion of the cooling water line 42, for cooling the water recovered from the stack unit 20 to the water storage tank 41, and a circulation pump 44 installed at a middle portion of the cooling water line 42, for pumping the water of the water storage tank 41 and supplying the pumped water to the stack unit 20 and so forth.

The temperature sensing unit 110 is constructed by fixedly installing a temperature sensor at an inner side surface or outer side surface of the system case S or fixedly installing each individual temperature sensor independently at each of the units, and electrically connecting the temperature sensor 110 (indicated by the same reference numeral as the temperature sensing unit) to the control unit 130 for batch control.

The heater unit 120 may be constructed in a manner to uniformly coil the inner circumferential surface of the system case S for batch heating the entire system, or in a manner to independently coil each individual pipeline, such as a connecting pipe for interconnecting the reforming unit 10, the stack unit 20, the heat exchange unit 40 or the like, for selectively heating a desired region. Particularly, as shown in FIG. 3, in a case where the heat exchange unit 40 is connected to a heating or hot water system of a conventional boiler B, that is, a boiler B that generates heat by direct combustion of fuel like LNG in a home or office, a heating apparatus, such as a ceramic heater, coil heater or the like, may be coiled around the water storage tank 41 in order to prevent freezing of the water of the water storage tank 41.

Preferably, the heater unit 120 is connected so as to be electrically transformed such that if the system is in operation, the electricity generated from the system may be utilized, while if the system is stopped, a utility power source may be utilized.

In the drawings, like reference numerals have been used throughout to designate identical elements.

The operational effects of the system for preventing freezing of a fuel cell according to the present invention are as follows.

That is, if the stack unit 20 reacts by a command from the control unit 130, the stack unit 20 generates electricity and heat, and the electricity is utilized as electrical energy required at homes or offices through the electricity conversion unit 30, while the heat is stored by a thermal energy storage system (not shown) or released. In this procedure, the circulation pump 44 is driven to pump the water of the water storage tank 41 to the cooling water line 42, and then supply it to the reforming unit 10 or the stack unit 20 in a cyclic fashion, thereby preventing overheating of the reforming unit 10 or the stack unit 20.

At this time, if an ambient temperature of the fuel cell is excessively low, fuel and air flow in a wet state in the pipelines connecting each of the units or the pipelines at each of the units. Thus, there is a risk that the fuel and air might be frozen due to an external cold temperature, especially, the water to be filled in the water storage tank 41 might be easily frozen. However, as in the present invention, in the case that each individual temperature sensor 110 is provided inside or outside the system and the heater unit 120 electrically connected to the temperature sensor 110 through the control unit 130 is installed at each unit, if the ambient temperature is lowered below a preset temperature according to an external temperature change, the heater unit 120 generates heat, thereby preventing freezing of the reforming unit 10, the stack unit 20, or the heat conversion unit 40.

Meanwhile, as for the power source of the heater unit 120, the electricity produced in the fuel cell is used while the fuel cell is being operated. On the other hand, if the fuel cell is stopped or the amount of produced electric power is insufficient, a commercial power source is used for driving, thereby achieving a stable operation.

In this way, it is possible to avoid the main parts of the fuel cell from being frozen due to an external temperature change, so that the performance of the entire system can be prevented from deterioration or malfunctioning, thereby increasing the stability of the fuel cell.

## Claims

1. An system for preventing freezing of a fuel cell, comprising:
a stack unit provided with a fuel electrode and an air electrode, for creating an electrical energy and a thermal energy by an electrochemical reaction between hydrogen and oxygen;
a temperature sensing unit installed in a manner to sense at least one of internal and external temperatures of a system case having the stack unit;
a heater unit for switching to a heat generation mode for operation if the temperature sensed by the temperatures sensing unit is less than a preset temperature; and
a control unit electrically connected to the temperature sensing unit and the heater unit, for controlling the operation of the heater unit depending on a temperature change sensed by the temperature sensing unit.

2. The system of claim 1, wherein the temperatures sensing unit has a temperature sensor installed at an inner side surface or outer side surface of the system case so as to be in contact therewith.

3. The system of claim 1, wherein the heater unit is formed by coil a hot wire so as to be in contact with the inner side surface or outer side surface of the system case.

4. The system of claim 1, wherein the heater unit is formed by coil a hot wire around pipelines.

5. The system of claim 4, wherein the hot wire is formed by coil so that each individual region can be controlled independently.

6. The system of claim 1, wherein the heater unit is comprised of a ceramic heater.

7. The system of claim 1, wherein the heater unit is comprised of a coil heater.

8. The system of claim 1, wherein further comprising a heat exchange unit coupled to the stack unit or the system comprising the stack unit so as to be heat exchangeable therewith, for circulating and supplying cooling water.

9. The system of claim 8, wherein the heat exchange unit includes: a water storage tank installed at a predetermined gap from the stack unit; a cooling water line for connecting between the stack unit and the water storage tank in a closed loop shape; a heat radiator installed at a middle portion of the cooling water line, for cooling the water recovered from the stack unit to the water storage tank, and a circulation pump installed at a middle portion of the cooling water line, for pumping the water of the water storage tank.

10. The system of claim 9, wherein a heater is installed at the water storage tank, for preventing freezing of the water to be filled in the water storage tank.

11. The system of claim 9, wherein a drainage line connected to the water storage tank is connected to a heating or hot water system of a building.
